(19) Europäisches Patentamt / European Patent Office / Office européen des brevets

(11) **EP 2 734 385 B1**

(12) **FASCICULE DE BREVET EUROPEEN**

(45) Date de publication et mention
de la délivrance du brevet:
**20.04.2016 Bulletin 2016/16**

(21) Numéro de dépôt: **12737804.0**

(22) Date de dépôt: **20.07.2012**

(51) Int Cl.:
*B60C 1/00* *(2006.01)*    *C08K 7/28* *(2006.01)*
*C08K 7/24* *(2006.01)*    *C08L 53/00* *(2006.01)*
*C08L 53/02* *(2006.01)*

(86) Numéro de dépôt international:
**PCT/EP2012/064245**

(87) Numéro de publication internationale:
**WO 2013/011111 (24.01.2013 Gazette 2013/04)**

(54) **BANDAGE PNEUMATIQUE POURVU D'UNE BANDE DE ROULEMENT À BASE D'UN ÉLASTOMÈRE THERMOPLASTIQUE**

LUFTREIFEN MIT EINER LAUFFLÄCHE AUF BASIS EINES THERMOPLASTISCHEN ELASTOMERS

PNEUMATIC TYRE PROVIDED WITH A TREAD BASED ON A THERMOPLASTIC ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2011 FR 1156608**

(43) Date de publication de la demande:
**28.05.2014 Bulletin 2014/22**

(73) Titulaires:
• **Compagnie Générale des Etablissements Michelin**
**63000 Clermont-Ferrand (FR)**
• **Michelin Recherche et Technique S.A.**
**1763 Granges-Paccot (CH)**

(72) Inventeurs:
• **CUSTODERO, Emmanuel**
**F-63040 Clermont-Ferrand Cedex 9 (FR)**
• **LEMAL, Vincent**
**F-63040 Clermont-Ferrand Cedex 9 (FR)**
• **MERINO LOPEZ, Jose**
**F-63040 Clermont-Ferrand Cedex 9 (FR)**
• **RIGO, Sébastien**
**F-63040 Clermont-Ferrand Cedex 9 (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A1- 2 108 527        WO-A1-2006/055612**
**WO-A1-2009/156050    WO-A1-2011/073186**

**Description**

La présente invention est relative aux bandes de roulement pour pneumatiques et aux compositions élastomères utilisées pour la fabrication de telles bandes de roulement.

Dans un pneumatique conventionnel, la bande de roulement est à base d'élastomères diéniques majoritairement.

Un objectif constant des manufacturiers de pneumatique est d'améliorer l'adhérence des pneumatiques au sol tout en conservant un très bon niveau de comportement routier (« *handling* ») sur véhicule automobile.

Pour améliorer le comportement routier, une rigidité supérieure de la bande de roulement est souhaitable. Toutefois, une telle rigidification de la bande de roulement, tout au moins pour sa partie superficielle qui est au contact du sol lors du roulage du pneumatique, pénalise de manière connue les propriétés d'adhérence sur un sol sec mais aussi sur un sol mouillé, enneigé ou verglacé.

Il existe donc un compromis de performance à optimiser.

Dans ce but, le document WO 02/10269 propose une formulation spécifique de bande de roulement à base d'un élastomère diénique, d'une charge renforçante inorganique avec un agent de couplage et comportant des accepteurs et donneurs de méthylène. Les bandes de roulement ainsi formées présentent après accommodation ou rodage mécanique, c'est-à-dire après contact de la bande de roulement sur un sol en conditions de travail, par exemple un roulage en ligne droite de quelques dizaines ou centaines de mètres, un gradient de rigidité radialement croissant de la surface vers l'intérieur de la bande de roulement.

Les demanderesses ont trouvé de manière surprenante une autre formulation de bande de roulement susceptible de donner des propriétés similaires.

L'invention a pour objet un bandage pneumatique pourvu d'une bande de roulement. Ce bandage pneumatique est caractérisé en ce que **caractérisé en ce que** ladite bande de roulement comporte au moins un élastomère thermoplastique, ledit élastomère thermoplastique étant un copolymère bloc comprenant au moins un bloc élastomère et au moins un bloc thermoplastique, le taux total d'élastomère thermoplastique étant compris dans un domaine variant de 65 à 100 pce (parties en poids pour cent parties d'élastomère) et en ce que ladite bande de roulement comporte des microparticules creuses et en ce que le taux de microparticules creuses de la bande de roulement est compris entre 1 et 40% en volume.

La présence des microparticules creuses dispersées dans la bande de roulement permet à la partie superficielle de celle-ci, après accommodation ou rodage mécanique, d'avoir une sensible diminution de rigidité liée à la rupture des microparticules creuses présentes. Cette bande de roulement présente ainsi un gradient de rigidité croissant de la surface vers l'intérieur très favorable aux performances d'adhérence du bandage pneumatique sans dégradation des performances de comportement sur véhicule.

La matrice de la bande de roulement du pneumatique selon l'invention comporte à titre majoritaire un élastomère thermoplastique à blocs. La préparation de la bande de roulement peut ainsi être réalisée dans un outil d'extrusion et non pas dans un mélangeur interne tel que ceux utilisés pour la préparation des compositions à base d'élastomères diéniques usuels. Cela permet de limiter les sollicitations subies par les microparticules creuses lors de la préparation des bandes de roulement et ainsi de limiter les ruptures de celles-ci lors de cette préparation.

L'invention concerne plus particulièrement les bandages pneumatiques destinés à équiper des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

## I. DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

I-1. Composition de la bande de roulement

Le bandage pneumatique selon l'invention est pourvu d'une bande de roulement ayant pour caractéristiques essentielles d'être à base d'au moins un élastomère thermoplastique, à titre d'élastomère majoritaire, ledit élastomère thermoplastique étant un copolymère bloc comprenant au moins un bloc élastomère et au moins un bloc thermoplastique et de comporter des microparticules creuses susceptibles de se rompre au roulage.

I-1-A. Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

Structure du TPE

La masse moléculaire moyenne en nombre (notée $M_n$) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse $M_n$ trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour bande de roulement de pneumatique.

La masse moléculaire moyenne en nombre ($M_n$) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 $\mu$m avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité $I_p$ (rappel : $I_p = M_w/M_n$ avec $M_w$ masse moléculaire moyenne en poids et $M_n$ masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la $T_g$ relative au bloc élastomère. Le TPE présente préférentiellement une température de transition vitreuse (« $T_g$ ») qui est préférentiellement inférieure ou égale à 25°C, plus préférentiellement inférieure ou égale à 10°C. Une valeur de $T_g$ supérieure à ces minima peut diminuer les performances de la bande de roulement lors d'une utilisation à très basse température ; pour une telle utilisation, la $T_g$ du TPE est plus préférentiellement encore inférieure ou égale à -10°C. De manière préférentielle également, la $T_g$ du TPE est supérieure à -100°C.

De manière connue, les TPE présentent deux pics de température de transition vitreuse ($T_g$, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une $T_g$ inférieure à la température ambiante (25°C), tandis que les blocs rigides ont une $T_g$ supérieure à 80°C.

Pour être de nature à la fois élastomère et thermoplastique, le TPE doit être muni de blocs suffisamment incompatibles (c'est-à-dire différents du fait de leur masse, de leur polarité ou de leur $T_g$ respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

Nature des blocs élastomères

Les blocs élastomères du TPE pour les besoins de l'invention, peuvent être tous les élastomères connus de l'homme de l'art. Ils peuvent être à chaîne carbonée (polyisoprène par exemple) ou non (silicones par exemple). Ils possèdent une Tg inférieure à 25°C, préférentiellement inférieure à 10°C, plus préférentiellement inférieure à 0°C et très préférentiellement inférieure à - 10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en $C_4$ - $C_{14}$ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Dans le cas des blocs élastomères insaturés, ce bloc élastomère du TPE est composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en $C_4$ - $C_{14}$ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle.

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en bande de roulement de bandage pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise en oeuvre.

Pour les besoins de l'invention, les élastomères TPE comprennent un ou plusieurs bloc(s) thermoplastique(s) ayant une Tg supérieure ou égale à 80°C et constitué(s) à partir de monomères polymérisés. Préférentiellement, ce bloc thermoplastique a une Tg comprise dans un domaine variant de 80°C à 250°C. De préférence, la Tg de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg supérieure ou égale à 80°C sont préférentiellement présents dans des proportions suffisantes pour préserver le caractère thermoplastique de l'élastomère selon l'invention. Le taux minimum de blocs thermoplastiques ayant une Tg supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg supérieure ou égale à 80°C.

Les blocs thermoplastiques ayant une Tg supérieure ou égale à 80°C peuvent être constitués à partir de monomères polymérisés de diverse nature, notamment, ils peuvent constituer les blocs suivants ou leurs mélanges :

- les polyoléfines (polyéthylène, polypropylène)
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;

- les polystyrènes (détaillés ci-dessous) ;
- les polycarbonates ;
- les polysulfones ;
- le polyméthylméthacrylate ;
- le polyétherimide ;
- les copolymères thermoplastiques tels que le copolymère acrylonitrile-butadiène-styrène (ABS)

Les blocs thermoplastiques ayant une Tg supérieure ou égale à 80°C peuvent aussi être obtenus à partir de monomères choisis parmi les composés suivants et leurs mélanges :

- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la bande de roulement peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en bande de roulement de bandage pneumatique.

Le bloc thermoplastique peut également être constitué de plusieurs blocs thermoplastiques tels que définis ci-dessus.

Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs ou étoilés : styrène/ éthylène/ butylène (SEB) linéaire ou étoilé, styrène/ éthylène/ propylène (SEP) linéaire ou étoilé, styrène/ éthylène/ éthylène/ propylène (SEEP) linéaire ou étoilé, styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB) linéaire ou étoilé, styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB) linéaire ou étoilé, styrène/ isoprène (SI) linéaire ou étoilé, styrène/ butadiène/ isoprène (SBI) linéaire ou étoilé, styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère dont la partie élastomère comporte une partie saturée et une partie insaturée comme par exemple le styrène/ butadiène/ butylène (SBB) linéaire ou étoilé, le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la bande de roulement selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ou encore les élastomères de type SIS commercialisés par Kuraray, sous le nom « Hybrar 5125 », ou commercialisés par Kraton sous le nom de «D1161 ». On peut également citer les élastomères commercialisés par la société Dexco Polymers sous la dénomination de « Vector » (e.g. « Vector 4114 », «Vector 8508 »). Parmi les TPE multiblocs, on peut citer le TPE «Vistamaxx» commercialisé par la société Exxon ; le TPE COPE commercialisé par la société DSM sous le dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

Quantité de TPE

Si d'éventuels autres élastomères (non thermoplastiques) sont utilisés dans la composition, le ou les élastomères TPE constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères TPE représentent au moins 95% (en particulier 100%) en poids de l'ensemble des élastomères présents dans la composition élastomère.

Ainsi, la quantité d'élastomère TPE est comprise dans un domaine qui varie de 65 à 100 pce, préférentiellement de 70 à 100 pce et notamment de 75 à 100 pce. De manière préférentielle également, la composition contient de 95 à 100 pce d'élastomère TPE. Le ou les élastomères TPE sont préférentiellement le ou les seuls élastomères de la bande de roulement.

I-1-B. Elastomère Non Thermoplastique

Le ou les élastomères thermoplastiques décrits précédemment sont suffisants à eux seuls pour que soit utilisable la bande de roulement selon l'invention.

La composition de la bande de roulement selon l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux total d'élastomère non thermoplastique, optionnel, est compris dans un domaine variant de 0 à 35 pce, préférentiellement de 0 à 30 pce, plus préférentiellement de 0 à 25 pce, et plus préférentiellement encore de 0 à 5 pce. Ainsi, lorsque la bande de roulement en contient, les élastomères non thermoplastiques représentent au plus 35 pce, préférentiellement au plus 30 pce, plus préférentiellement au plus 25 pce et de manière très préférentielle au plus 5 pce. De manière très préférentielle également, la bande de roulement du pneumatique selon l'invention ne contient pas d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques « essentiellement saturés » (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:

(a) tout homopolymère obtenu par polymérisation d'un monomère diène conjugué ayant de 4 à 12 atomes de carbone ;

(b) tout copolymère obtenu par copolymérisation d'un ou plusieurs diènes conjugués entre eux ou avec un ou plusieurs composés vinyle aromatique ayant de 8 à 20 atomes de carbone ;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la bande de roulement du pneumatique selon la présente invention.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

I-1-C. <u>Microparticules creuses</u>

La seconde caractéristique essentielle de la bande de roulement du bandage pneumatique selon l'invention est de comporter des microparticules creuses.

Par microparticules creuses, on entend des microparticules de matériaux constitutifs variés à coque rigide et creuses. Les microparticules creuses peuvent comporter un liquide et préférentiellement un gaz à l'intérieur, notamment de l'air.

Les microparticules creuses remplies d'un gaz sont notamment caractérisées par leur pression d'éclatement.

La pression d'éclatement est mesurée par un test sous pression hydrostatique d'azote. Cette méthode détermine le pourcentage de réduction de volume d'un échantillon de microparticules creuses lorsque cet échantillon est soumis à une pression d'azote donnée en connaissant la densité des microparticules creuses. Un mélange de microparticules creuses et de talc est placé dans un densitomètre pour en mesurer la densité. Le mélange est ensuite placé dans un dispositif de test à pression hydrostatique variable et est soumis à un cycle de pression d'azote donné. A la fin du cycle de pression, la densité du mélange est mesurée et comparée à la densité initiale. Le pourcentage de survie des microparticules creuses est alors déterminé par la formule suivante :

$$\%S = 100 - \frac{(P_F - P_I)(B+T)x100}{P_F(B+T-\frac{P_I}{P_T}T)}$$

dans laquelle $P_I$ est la densité initiale du mélange, $P_F$ est la densité finale du mélange, $P_T$ est la densité du talc, $B$ est le poids de microparticules creuses dans le mélange et T est le poids de talc dans le mélange.

La pression d'éclatement (« *crush test »*) des microparticules creuses citées dans ce document correspond à la pression hydrostatique pour laquelle on mesure un pourcentage de survie (« *target survival of about 90%* ») de l'ordre de 90% en utilisant la méthode de test précédemment décrite.

De préférence, la pression d'éclatement est préférentiellement inférieure à 800 bars. On a en effet constaté qu'au-delà de cette valeur, le mécanisme de rodage de la bande de roulement n'est plus assez marqué en raison de la très forte résistance des microparticules creuses à la rupture.

De préférence, les microparticules creuses ont une pression d'éclatement supérieure à 200 bars. Lorsque la pression d'éclatement est inférieure à 200 bars, on a en effet constaté que beaucoup de ces microparticules creuses sont rompues lors de la préparation de la bande de roulement.

Très préférentiellement, la pression d'éclatement est supérieure à 300 bars ; cela permet de limiter le nombre de microparticules creuses rompues lors de la préparation de la bande de roulement.

Les microparticules creuses peuvent être choisies de manière préférentielle dans le groupe des microparticules creuses de verre, de céramique, de métal, de silice, d'alumine, de zircone et leurs mélanges.

Préférentiellement, on utilise des microparticules creuses de verre et/ou de céramique.

Le taux de microparticules creuses de la bande de roulement peut être compris entre 1et 40 % en volume et de préférence entre 5 et 35 % en volume. En dessous de 1%, l'effet des microsphères devient insuffisant et au-delà de 40%, la réalisation de la bande de roulement avec une dispersion satisfaisante des microparticules creuses devient difficile.

Les microparticules creuses peuvent avoir toute forme utile. Dans beaucoup de modes de réalisation, les microparticules creuses ont une forme sphérique, oblongue, ou elliptique. Dans des modes de réalisation particuliers, les microparticules creuses ont une forme sphérique et sont décrites comme des microsphères creuses.

Le diamètre moyen en volume des microparticules creuses est dans la gamme de 5 à 500 microns. Dans le cas de microsphères creuses de verre ou de céramique, ce diamètre moyen en volume est de préférence compris entre 20 et 150 microns. En dessous de 20 microns, la résistance à la rupture des microparticules creuses est trop importante et au-dessus de 150 microns, c'est l'inverse. Dans les deux cas, le mécanisme de rodage n'est plus assez marqué.

En fonction de leurs caractéristiques de pression d'éclatement, de nature de matériau et géométriques, la densité des microparticules creuses varie entre 0,3 et 2.

Plus la densité est basse, tout en conservant une pression d'éclatement suffisante, plus l'effet des microparticules creuses est sensible après rodage mécanique. Une densité comprise entre 0,3 et 0,4 est ainsi particulièrement intéressante pour des microsphères creuses de verre ou de céramique.

Des exemples de microsphères creuses en verre sont disponibles chez la société 3M sous les références : 3M™ Glass Bubbbles S32, S38, S38HS, S60HS. Des exemples de microsphères creuses en céramique sont disponibles chez la société Trelleborg Fillite sous les références : 106, 160.

I-1-D. <u>Charge nanométrique ou renforçante</u>

L'élastomère thermoplastique décrit précédemment est suffisant à lui seul comme élastomère pour que soit utilisable la bande de roulement selon l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, de préférence de 30 à 400 $m^2$/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante dans la composition (noir de carbone et/ou charge inorganique renforçante telle que silice) est compris dans un domaine de 0 à 20%, ce qui correspond à un taux de 0 à 50 pce pour une composition sans plastifiant. Préférentiellement, la composition comprend moins de 30 pce de charge renforçante et plus préférentiellement moins de 10 pce. Selon une variante préférentielle de l'invention, la composition ne contient pas de charge renforçante.

I-1-E. Plastifiants

L'élastomère thermoplastique décrit précédemment est suffisant à lui seul comme élastomère pour que soit utilisable la bande de roulement selon l'invention.

Toutefois, selon un mode de réalisation préférentiel de l'invention, la composition élastomère précédemment décrite peut comporter également, un agent plastifiant, tel qu'une huile d'extension (ou huile plastifiante) ou une résine plastifiante dont la fonction est de faciliter la mise en oeuvre de la bande de roulement, particulièrement son intégration au bandage pneumatique par un abaissement du module et une augmentation du pouvoir tackifiant.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

Par exemple, l'huile d'extension est choisie dans le groupe constitué par les huiles paraffiniques, telle qu'une huile paraffinique à basse viscosité (PABV).

L'homme du métier saura, à la lumière de la description et des exemples de réalisation qui suivent, ajuster la quantité de plastifiant en fonction de l'élastomère TPE utilisé (comme indiqué précédemment) ; des conditions particulières d'usage du pneumatique muni de la bande de roulement, et notamment en fonction de l'objet pneumatique dans lequel elle est destinée à être utilisée.

Lorsqu'elle est utilisée, on préfère que le taux d'huile d'extension varie de 0 à 80 pce, plus préférentiellement de 0 à 50 pce selon la Tg et le module visés.

I-1-F. Additifs divers

La bande de roulement décrite précédemment peut comporter par ailleurs les divers additifs usuellement présents dans bandes de roulements connues de l'homme du métier. On citera par exemple des charges micrométriques, inertes telles que les charges lamellaires connues de l'homme de l'art, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique. Egalement et à titre optionnel, la composition de la bande de roulement de l'invention peut contenir un système de réticulation connu de l'homme du métier. Préférentiellement, la composition ne contient pas de système de réticulation.

Outre les élastomères précédemment décrits, la composition de la bande de roulement pourrait aussi comporter, toujours selon une fraction pondérale minoritaire par rapport à l'élastomère blocs, des polymères autres que des élastomères, tels que par exemple des polymères thermoplastiques, et notamment les polymères de poly(para-phénylène éther) (noté en abrégé "PPE"). Ces polymères thermoplastiques PPE sont bien connus de l'homme du métier, ce sont des résines solides à température ambiante (20°C) compatibles avec les polymères styréniques, qui ont notamment été utilisées pour augmenter la Tg d'élastomères TPE dont le bloc thermoplastique est un bloc styrénique (voir par exemple "Thermal, Mechanical and Morphological Analyses of Poly(2,6-dimethyl-1,4-phenylene oxide)/Styrene-Butadiene-Styrene Blends", Tucker, Barlow and Paul, Macromolecules, 1988, 21, 1678-1685).

I-2. Préparation de la bande de roulement

La bande de roulement objet de l'invention peut être mise en oeuvre par tout procédé de mélangeage, notamment par mélangeage en phase liquide, particulièrement les procédés mettant en oeuvre un faible cisaillement. Elle peut aussi être mise en oeuvre, de façon classique pour des TPE, par extrusion ou moulage, par exemple à partir d'une matière première disponible sous la forme de billes ou de granulés.

La bande de roulement pour le bandage pneumatique selon l'invention est préparée par exemple, par incorporation des différents composants dans une extrudeuse bi-vis, de façon à réaliser la fusion de la matrice et une incorporation de tous les ingrédients, puis utilisation d'une filière permettant de réaliser le profilé. Les moyens et conditions utilisés doivent être adaptés pour ne pas entraîner de casse des microsphères pendant la mise en oeuvre. En particulier, il est important de n'introduire les microsphères dans le corps de l'extrudeuse que lorsque le TPE est complètement fondu. La bande de roulement est ensuite moulée dans le moule de cuisson du pneumatique.

Si le bloc élastomère du TPE est un bloc élastomère saturé, il pourra être nécessaire d'inclure au bandage pneumatique une couche d'adhésion sous la bande de roulement qui contiendra un TPE à bloc élastomère insaturé pour favoriser l'adhésion entre ladite bande de roulement et la couche adjacente au sein du bandage pneumatique fini.

Cette bande de roulement peut-être montée sur un bandage pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet. Optionnellement et comme indiqué précédemment, le pneumatique selon l'invention peut comprendre en outre une sous-couche ou une couche d'adhésion entre la bande de roulement et le sommet.

## II. EXEMPLES DE RÉALISATION DE L'INVENTION

Des compositions de bande de roulement pour bandage pneumatique selon l'invention ont été préparées comme indiqué précédemment avec une matrice thermoplastique élastomérique SBS (SOLT 166 de la société Europrene) introduite dans une extrudeuse bi-vis avec une température de vis de 180°C qui permet la fusion de la matrice thermoplastique et sa mise en forme. Les microparticules creuses sont introduites dans l'extrudeuse en aval de la matrice thermoplastique élastomérique de sorte que celle-ci soit déjà complètement fondue. Plusieurs natures de microparticules creuses ont été utilisées, des microsphères de verre et des microsphères de céramique. L'introduction des microsphères creuses est faite suffisamment tôt au sein de la bi-vis afin que leur dispersion soit correctement réalisée. A la tête de l'extrudeuse bi-vis, une filière plate est disposée afin d'obtenir les profilés nécessaires à la réalisation d'une bande de roulement de bandage pneumatique.

Une observation des microsphères creuses au sein des profilés peut être menée par microscopie électronique ; on distingue aisément les microsphères creuses, et, dans certains cas leur destruction. Plus précisément, nous avons observé que lorsque la pression d'éclatement des microsphères creuses est inférieure à 200 bars de nombreuses microsphères creuses brisées sont observées ; en revanche lorsque la pression d'éclatement est supérieure à 300 bars les microsphères creuses sont dans leur plus grande majorité intactes après l'étape de réalisation de la composition.

Le tableau 1 donne les caractéristiques des microparticules creuses testées, données fournisseurs.

Tableau 1

| Nature | Référence | Pression d'éclatement (*Target Crush Strenght (90% survival)*) | | diamètres ($\mu$m) | densité moyenne des particules (g/cm$^3$) |
|---|---|---|---|---|---|
| | | psi | bar | | |
| verre 3M™ Glass Bubbles | S32 | 2000 | 138 | 20 - 80 | 0,29 - 0,35 |
| | S38 | 4000 | 276 | 15 - 85 | 0,35 - 0,41 |
| | S38 HS | 5500 | 380 | 19 - 85 | 0,35 - 0,41 |
| | S60 | 10000 | 690 | 15 - 65 | 0,57 - 0,63 |

(suite)

| Nature | Référence | Pression d'éclatement (*Target Crush Strenght (90% survival))* | | diamètres (μm) | densité moyenne des particules (g/cm$^3$) |
|---|---|---|---|---|---|
| | | psi | bar | | |
| céramique Trelleborg Fillite® | 106 | 1500-3000 | 105-210 | 5 - 106 | 0,65 - 0,85 |
| | 160 | 1500-3000 | 105-210 | 5 - 180 | 0,65 - 0,85 |

Le tableau 2 présente les formulations des mélanges de bande de roulement testées. Le témoin est la composition C-01 qui comporte uniquement un élastomère thermoplastique, l'Europrene SOLT 166. Tous les autres mélanges ont la même matrice dans laquelle on a ajouté des microsphères de verre ou de céramique à un taux de 30% en volume. Entre parenthèses, on a indiqué le taux des microsphères creuses en pce.

Tableau 2

| Noms commerciaux | C-01 | C-02 | C-03 | C-04 | C-05 | C-06 | C-07 |
|---|---|---|---|---|---|---|---|
| Europrene SOLT 166 (pce) | 100 | 100 | 100 | 100 | 100 | 100 | 100 |
| 3M Glass Bubbles - S60 % volumique (pce) | | 30 (27,1) | | | | | |
| 3M Glass Bubbles - S38 % volumique (pce) | | | 30 (17,1) | | | | |
| 3M Glass Bubbles - S38HS | | | | 30 (17,1) | | | |
| 3M Glass Bubbles - S32 % volumique (pce) | | | | | 30 (14,4) | | |
| Trelleborg Fillite 106 % volumique (pce) | | | | | | 30 (27,1) | |
| Trelleborg Fillite 160 % volumique (pce) | | | | | | | 30 (29,3) |

Des bandages pneumatiques selon l'invention ont ensuite été préparés selon les méthodes habituelles, avec les constituants classiques connus de l'homme du métier : un sommet, deux flancs et deux bourrelets, une armature de carcasse ancrée aux deux bourrelets, une armature de sommet et une bande de roulement, la bande de roulement étant celle décrite pour les besoins de la présente invention.

Après vulcanisation des bandages pneumatiques, une mesure de la dureté Shore A des bandes de roulement est réalisée pour les différentes compositions testées. Les bandages pneumatiques sont ensuite soumis à un roulage de 100 km et une seconde mesure de dureté Shore A est réalisée. Les mesures de dureté Shore A sont réalisées selon la norme ASTM D 2240.

Le tableau 3 donne les mesures de dureté Shore A réalisées avant et après le roulage.

Tableau 3

| Composition | 1ère mesure de Shore A | 2nde mesure de Shore A | Ecart de Shore A |
|---|---|---|---|
| C-01 | 70,6 | 66,2 | -4,4 |
| C-02 | 78,8 | 70,9 | -7,9 |
| C-03 | 76,8 | 64,8 | -12,0 |
| C-04 | 74,7 | 63,8 | -10,9 |
| C-05 | 74,6 | 65,1 | -9,5 |
| C-06 | 76,0 | 67,2 | -8,8 |
| C-07 | 77,2 | 67,9 | -9,3 |

Toutes les bandes de roulement voient leur dureté Shore diminuer après le roulage de 100 km. Ce phénomène d'accommodation est bien connu et toujours observé sur les bandes de roulement, mais la variation est en moyenne deux fois plus forte pour les compositions comportant des microsphères creuses que pour la bande de roulement n'en comportant pas.

Des observations en microscopie électronique ont été réalisées sur les bandes de roulement après le roulage de 100 km. Ces observations ont montré que beaucoup de microsphères creuses étaient brisées dans la pellicule de surface de la bande de roulement, c'est-à-dire dans les 2 à 3 mm de surface alors qu'en profondeur leur grande majorité était intacte.

La diminution de dureté Shore A est donc bien la conséquence de la rupture dans la pellicule de surface de la bande de roulement des microsphères creuses en raison des pressions locales élevées liées au roulage sur un sol rugueux. La présence des microsphères creuses permet donc effectivement de créer lors du roulage un gradient de rigidité de la bande de roulement favorable pour les propriétés d'adhérence sans dégrader le comportement du véhicule puisque la rigidité du mélange n'est pas affectée dans sa masse, les microsphères creuses n'étant pas altérées.

L'homme de l'art saura ajuster le taux et la nature des microparticules creuses pour obtenir la diminution de rigidité attendue en fonction de l'effet voulu en adhérence et des conditions d'utilisation (types de pneumatiques, roulages).

**Revendications**

1. Bandage pneumatique pourvu d'une bande de roulement, **caractérisé en ce que** ladite bande de roulement comporte au moins un élastomère thermoplastique, ledit élastomère thermoplastique étant un copolymère bloc comprenant au moins un bloc élastomère et au moins un bloc thermoplastique, le taux total d'élastomère thermoplastique étant compris dans un domaine variant de 65 à 100 pce (parties en poids pour cent parties d'élastomère), **en ce que** ladite bande de roulement comporte des microparticules creuses et **en ce que** le taux de microparticules creuses de la bande de roulement est compris entre 1 et 40 % en volume.

2. Bandage pneumatique selon la revendication 1, dans lequel la pression d'éclatement des microparticules creuses est inférieure à 800 bars.

3. Bandage pneumatique selon l'une des revendications 1 et 2, dans lequel la pression d'éclatement des microparticules creuses est supérieure à 200 bars.

4. Bandage pneumatique selon la revendication 3, dans lequel la pression d'éclatement des microparticules creuses est supérieure à 300 bars.

5. Bandage pneumatique selon l'une des revendications 2 à 4, dans lequel la pression d'éclatement des microparticules creuses est comprise entre 300 et 600 bars.

6. Bandage pneumatique selon l'une quelconque des revendications précédentes, dans lequel les microparticules creuses sont choisies dans le groupe des microparticules creuses de verre, de céramique, de métal, de silice, d'alumine, de zircone et leurs mélanges.

7. Bandage pneumatique selon la revendication 6, dans lequel les microparticules creuses sont choisies dans le groupe des microparticules creuses de verre et de céramique.

8. Bandage pneumatique selon l'une quelconque des revendications précédentes, dans lequel le taux de microparticules creuses de la bande de roulement est compris entre 5 et 35% en volume.

9. Bandage pneumatique selon l'une quelconque des revendications précédentes, dans lequel les microparticules creuses comportent des microsphères creuses.

10. Bandage pneumatique selon l'une quelconque des revendications précédentes, dans lequel le bloc élastomère du copolymère bloc est choisi parmi les élastomères ayant une température de transition vitreuse inférieure à 25°C.

11. Bandage pneumatique selon l'une quelconque des revendications précédentes, dans lequel le ou les blocs élastomères du copolymère bloc sont choisis parmi les élastomères diéniques.

12. Bandage pneumatique selon l'une quelconque des revendications précédentes, dans lequel le ou les blocs thermoplastiques du copolymère bloc sont choisis parmi les polymères ayant une température de transition vitreuse supérieure à 80°C, et, dans le cas d'un bloc thermoplastique semi cristallin, une température de fusion supérieure à 80°C.

**13.** Bandage pneumatique selon l'une quelconque des revendications précédentes, dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

**14.** Bandage pneumatique selon l'une quelconque des revendications précédentes, dans lequel le ou les élastomères thermoplastiques sont les seuls élastomères de la bande de roulement.

**Patentansprüche**

**1.** Luftreifen mit einer Lauffläche, **dadurch gekennzeichnet, dass** die Lauffläche mindestens ein thermoplastisches Elastomer umfasst, wobei es sich bei dem thermoplastischen Elastomer um ein Blockcopolymer mit mindestens einem elastomeren Block und mindestens einem thermoplastischen Block handelt und der Gesamtgehalt an thermoplastischem Elastomer in einem Bereich von 65 bis 100 phe (Gewichtsteile pro hundert Teile Elastomer) liegt, und das Laufband hohle Mikroteilchen umfasst und der Gehalt des Laufbands an hohlen Mikroteilchen zwischen 1 und 40 Vol.-% liegt.

**2.** Luftreifen nach Anspruch 1, wobei der Berstdruck der hohlen Mikroteilchen weniger als 800 bar beträgt.

**3.** Luftreifen nach einem der Ansprüche 1 und 2, wobei der Berstdruck der hohlen Mikroteilchen mehr als 200 bar beträgt.

**4.** Luftreifen nach Anspruch 3, wobei der Berstdruck der hohlen Mikroteilchen mehr als 300 bar beträgt.

**5.** Luftreifen nach einem der Ansprüche 2 bis 4, wobei der Berstdruck der hohlen Mikroteilchen zwischen 300 und 600 bar liegt.

**6.** Luftreifen nach einem der vorhergehenden Ansprüche, wobei die hohlen Mikroteilchen aus der Gruppe von hohlen Mikroteilchen aus Glas, Keramik, Metall, Siliciumdioxid, Aluminiumoxid, Zirconiumdioxid und Mischungen davon ausgewählt sind.

**7.** Luftreifen nach Anspruch 6, wobei die hohlen Mikroteilchen aus der Gruppe von hohlen Mikroteilchen aus Glas und Keramik ausgewählt sind.

**8.** Luftreifen nach einem der vorhergehenden Ansprüche, wobei der Gehalt des Laufbands an hohlen Mikroteilchen zwischen 5 und 35 Vol.-% liegt.

**9.** Luftreifen nach einem der vorhergehenden Ansprüche, wobei die hohlen Mikroteilchen hohle Mikrokugeln umfassen.

**10.** Luftreifen nach einem der vorhergehenden Ansprüche, wobei der elastomere Block des Blockcopolymers aus Elastomeren mit einer Glasübergangstemperatur von weniger als 25°C ausgewählt ist.

**11.** Luftreifen nach einem der vorhergehenden Ansprüche, wobei der elastomere Block bzw. die elastomeren Blöcke des Blockcopolymers aus Dien-Elastomeren ausgewählt ist bzw. sind.

**12.** Luftreifen nach einem der vorhergehenden Ansprüche, wobei der thermoplastische Block bzw. die thermoplastischen Blöcke des Copolymers aus Polymeren mit einer Glasübergangstemperatur von mehr als 80°C und im Fall eines teilkristallinen thermoplastischen Blocks einer Schmelztemperatur von mehr als 80°C ausgewählt ist bzw. sind.

**13.** Luftreifen nach einem der vorhergehenden Ansprüche, wobei das thermoplastische Elastomer bzw. die thermoplastischen Elastomere aus der Gruppe bestehend aus thermoplastischen Styrol/Butadien(SB)-, Styrol/Isopren(SI)-, Styrol/Butadien/Isopren(SBI)-, Styrol/Butadien/Styrol(SBS)-, Styrol/Isopren/Styrol(SIS)-, Styrol/Butadien/Isopren/Styrol(SBIS)-Elastomeren und Mischungen dieser Copolymere ausgewählt ist bzw. sind.

**14.** Luftreifen nach einem der vorhergehenden Ansprüche, wobei es sich bei dem thermoplastischen Elastomer bzw. den thermoplastischen Elastomeren um die einzigen Elastomere des Laufbands handelt.

**Claims**

1. Tyre provided with a tread, **characterized in that** the said tread comprises at least one thermoplastic elastomer, the said thermoplastic elastomer being a block copolymer comprising at least one elastomer block and at least one thermoplastic block, the total content of thermoplastic elastomer being within a range varying from 65 to 100 phr (parts by weight per hundred parts of elastomer), **in that** the said tread comprises hollow microparticles and **in that** the content of hollow microparticles of the tread is between 1% and 40% by volume.

2. Tyre according to Claim 1, in which the bursting pressure of the hollow microparticles is less than 800 bar.

3. Tyre according to either of Claims 1 and 2, in which the bursting pressure of the hollow microparticles is greater than 200 bar.

4. Tyre according to Claim 3, in which the bursting pressure of the hollow microparticles is greater than 300 bar.

5. Tyre according to one of Claims 2 to 4, in which the bursting pressure of the hollow microparticles is between 300 and 600 bar.

6. Tyre according to any one of the preceding claims, in which the hollow microparticles are selected from the group of hollow glass, ceramic, metal, silica, alumina and zirconia microparticles and their mixtures.

7. Tyre according to Claim 6, in which the hollow microparticles are selected from the group of hollow glass and ceramic microparticles.

8. Tyre according to any one of the preceding claims, in which the content of hollow microparticles of the tread is between 5% and 35% by volume.

9. Tyre according to any one of the preceding claims, in which the hollow microparticles comprise hollow microspheres.

10. Tyre according to any one of the preceding claims, in which the elastomer block of the block copolymer is chosen from elastomers having a glass transition temperature of less than 25°C.

11. Tyre according to any one of the preceding claims, in which the elastomer block or blocks of the block copolymer are chosen from diene elastomers.

12. Tyre according to any one of the preceding claims, in which the thermoplastic block or blocks of the block copolymer are chosen from polymers having a glass transition temperature of greater than 80°C and, in the case of a semicrystalline thermoplastic block, a melting point of greater than 80°C.

13. Tyre according to any one of the preceding claims, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/isoprene/styrene (SIS) and styrene/butadiene/isoprene/styrene (SBIS) thermoplastic elastomers and the mixtures of these copolymers.

14. Tyre according to any one of the preceding claims, in which the thermoplastic elastomer or elastomers are the only elastomers of the tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0210269 A
- US 4946899 A, Kennedy, Puskas, Kaszas et Hager
- FR 2740778
- US 6013718 A
- FR 2765882
- US 5977238 A
- WO 0192402 A
- US 6815473 B
- WO 2004096865 A
- US 20060089445 A
- EP 1127909 A
- US 6503973 B
- WO 0316837 A

**Littérature non-brevet citée dans la description**

- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** *Journal of Polymer Science Part A : Polymer Chemistry,* 1992, 30, , 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144
- **J.E. PUSKAS ; G. KASZAS ; J.P. KENNEDY.** *Macromolecular Science, Chemistry,* 1991, vol. A28, 65-80
- **TUCKER ; BARLOW ; PAUL.** Thermal, Mechanical and Morphological Analyses of Poly(2,6-dimethyl-1,4-phenylene oxide)/Styrene-Butadiene-Styrene Blends. *Macromolecules,* 1988, vol. 21, 1678-1685